# EUROPÄISCHE PATENTSCHRIFT

(11) **EP 1 745 599 B1**
(45) Veröffentlichungstag und Bekanntmachung des Hinweises auf die Patenterteilung: **08.09.2010**
(21) Anmeldenummer: 05729756.6
(22) Anmeldetag: 02.03.2005
(51) Int. Cl.: H04W 88/08

(54) **DESKTOP-TELEFON MIT FUNKTIONALITÄT ALS WLAN-BASISSTATION ODER WLAN-CLIENT**
DESKTOP TELEPHONE WITH WLAN BASE STATION FUNCTIONALITY OR WLAN CLIENT FUNCTIONALITY
TÉLÉPHONE DESKTOP À FONCTIONNALITÉ STATION DE BASE WLAN OU CLIENT WLAN

(30) Priorität: 13.05.2004 DE 102004023803
(43) Veröffentlichungstag der Anmeldung: 24.01.2007
(73) Patentinhaber: SIEMENS AKTIENGESELLSCHAFT, 80333 München (DE)
(72) Erfinder: WITTMANN, Christian, A-1140 Wien (AT)
(74) Vertreter: Fritzsche, Thomas
(86) Internationale Anmeldenummer: PCT/EP2005/050928
(87) Internationale Veröffentlichungsnummer: WO 2005/112352

(56) Entgegenhaltungen:
- US-A1- 2002 159 419
- US-A1- 2002 174 254
- US-A1- 2003 026 270
- US-A1- 2003 134 596

## Beschreibung

Die vorliegende Erfindung betrifft ein Deskop-Telefon gemäß dem Oberbegriff des Patentanspruchs 1.

In der Telekommunikation wird generell zwischen einer schnurgebundenen und einer schnurlosen Kommunikation unterschieden. Hierbei sind schnurgebundene Kommunikationsendgeräte entweder direkt über ein Kabel oder abgesetzt über ein Netzwerk mit einer zentralen Kommunikationseinrichtung, beispielsweise einer Kommunikationsanlage (häufig auch als Kommunikationsserver oder Vermittlungsanlage bezeichnet), verbunden. Bei einer schnurlosen Kommunikation erfolgt dahingehen eine Datenübermittlung zwischen einem schnurlosen Kommunikationsendgerät und der zentralen Kommunikationseinrichtung über eine Basisstation, die über eine Luftschnittstelle mit dem schnurlosen Kommunikationsendgerät verbunden ist. Eine Anbindung der Basisstation an die zentrale Kommunikationseinrichtung wird in der Regel über eine separate, breitbandige Festverbindung realisiert. Eine Datenübermittlung zwischen dem schnurlosen Kommunikationsendgerät und der Basisstation über die Luftschnittstelle erfolgt auf Basis bekannter Standards, wie beispielsweise DECT (Digital Enhanced Cordless Telecommunications), GSM (Global System for Mobile Communications), UMTS (Universal Mobile Telecommunications System) oder WLAN (Wireless Local Area Network).

Ein definierter geographischer Bereich um eine Basisstation in dem eine drahtlose Verbindung vorgegebener Qualität zwischen einem schnurlosen Kommunikationsendgerät und einer Basisstation herstellbar ist, wird in der Literatur häufig als Funkzelle dieser Basisstation bezeichnet. Um einen größeren geographischen Bereich mit Verbindungsmöglichkeiten zu versorgen, sind in der Regel mehrere Basisstationen so über den zu versorgenden geographischen Bereich verteilt, dass ihre Funkzellen ein flächendeckendes Funknetz bilden. Ein in einem solchen Funknetz registriertes schnurloses Kommunikationsendgerät kann dabei zwischen den jeweils in Funkreichweite befindlichen Basisstationen dieses Funknetzes beliebig wechseln. Das "Weiterreichen" eines schnurlosen Kommunikationsendgerätes von einer ersten Basisstation zu einer zweiten Basisstation bei bestehender Verbindung wird in der Literatur häufig als "handover" bezeichnet.

Nachteilig an der beschriebenen Anordnung ist, dass die Erstellung eines derartigen aus einer Vielzahl von Basisstationen bestehenden Funknetzes mit einem hohen Aufwand verbunden ist.

In US 2002/174254 sind Netzkonferenzterminals beschrieben, die durch Notebooks realisiert sind und in denen jeweils eine Netzschnittstellenkarte vorgesehen ist. Die Netzschnittstellenkarte ist für den Anschluss an ein Wireless LAN ausgestaltet, wobei mit Hilfe der Netzschnittstellenkarten die Netzkonferenzterminals in einem Wireless LAN zu einer Konferenz eingerichtet werden. Hierbei stellt ein Netzkonferenzterminal den Host und die anderen Netzkonferenzterminals die Clients dar. Information bzw. Daten, die an allen Displays der Notebooks angezeigt werden sollen - bei Konferenzen üblich - können sowohl von den Clients oder dem Host stammen und werden über das Wireless LAN an die anderen verteilt. Auch kann von den Clients eine Anforderung kommen, Daten bzw. Informationen von einem Server oder WWW Server in einem Wire LAN zu erhalten. Die Anforderung wird an den Host geleitet, worauf der Host auf den Server oder WWW Server im Wire LAN zugreift und die gewünschten, übermittelten Informationen bzw. Daten an den Client weiterleitet und dort angezeigt werden.

Aus der US 2003/134596 sind Sectored Bluetooth Access Points bekannt, die einerseits an ein Ethernet und andererseits mit bis zu 7 "Bluetooth devices" kommunizieren. Ein Sectored Bluetooth Access Point ist in vier Sektoren unterteilt, wobei in jedem Sektor ein Bluetooth Radio Modul vorgesehen ist. Bluetooth Endgeräte in den jeweiligen Sektoren kommunizieren über die Bluetooth Radio Module und dem Sectored Bluetooth Access Point mit dem Ethernet.

Der vorliegenden Erfindung liegt somit die Aufgabe zugrunde, Maßnahmen vorzusehen, durch die eine einfache Anbindung von schnurlosen Endgeräten an eine zentrale Kommunikationseinrichtung ermöglicht wird.

Eine Lösung der Aufgabe erfolgt erfindungsgemäß ausgehend von den Merkmalen des Oberbegriffs des unabhängigen Patentanspruchs 1 durch dessen kennzeichnende Merkmale.

Ein wesentlicher Vorteil der Erfindung besteht darin, dass ein herkömmliches "Desktop-Telefon" mittels handelsüblich erhältlichen, steckbaren Komponenten auf einfache Weise in eine Basisstation für das Funknetz - beispielsweise ein WLAN-Netzwerk - umgewandelt und auf diese Weise eine Verbindung zwischen dem schnurlosen Endgerät und der zentralen Kommunikationseinrichtung über das Desktop-Telefon aufgebaut werden kann. Ein Aufstellen zusätzlicher Basisstationen zur Vergrößerung des Funknetzes auf bisher nicht abgedeckte Funkbereiche ist somit nicht notwendig.

Vorteilhafte Weiterbildungen der Erfindung sind in den Unteransprüchen angegeben.

Ein Vorteil von in den Unteransprüchen angegebenen Ausgestaltungen der Erfindung besteht darin, dass durch die Verwendung eines WLAN-Netzwerks (Wireless-LAN) als zweites Netzwerk im zweiten Netzwerk eine hohe Datenübertragungsrate realisiert werden kann, so dass auch eine komfortable Übertragung von Multimedia-Daten ermöglicht wird.

Ein weiterer Vorteil von in den Unteransprüchen angegebenen Ausgestaltungen der Erfindung besteht darin, dass das Desktop-Telefon zusätzlich als mobiles Kommunikationsendgerät genutzt werden kann, so dass die bei herkömmlichen schnurlosen Telefonen bestehenden Einschränkungen im Bereich der Bedienerfreundlichkeit, der Akkulaufzeit oder dem Freisprechkomfort umgangen werden.

Ein Ausführungsbeispiel der Erfindung wird im Folgenden anhand der Zeichnung näher erläutert.

Dabei zeigt:

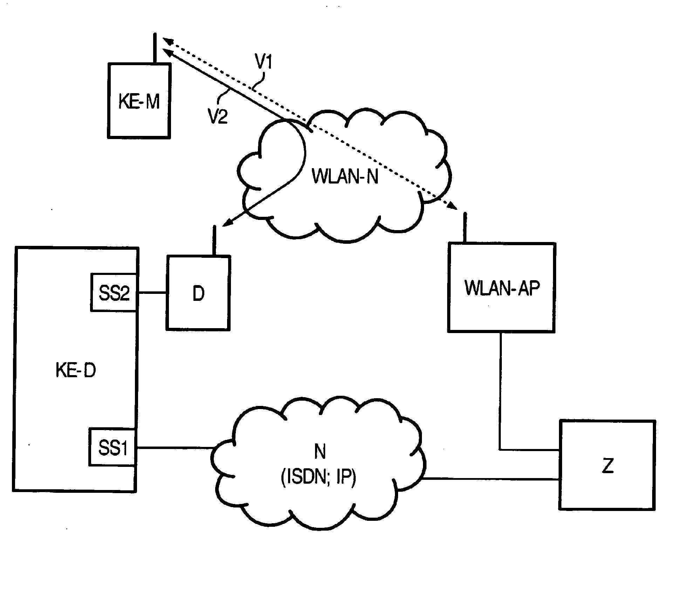

- Fig. 1:: ein Strukturbild zur schematischen Darstellung des erfindungsgemäßen Kommunikationsendgerätes in einer entsprechenden Netzwerk-Infrastruktur.

Fig. 1 zeigt eine schematische Darstellung des als Desktop-Telefon ausgestalteten erfindungsgemäßen Kommunikationsendgerätes KE-D, das über eine erste Schnittstelle SS1 mit einem ersten Netzwerk N - beispielsweise einem ISDN-Kommunikationsnetz oder einem IPorientierten (Internet Protocol) Netzwerk - und über eine zweite Schnittstelle SS2 mit einem WLAN-Netzwerk WLAN-N verbindbar ist. Bei dem Kommunikationsendgerät KE-D handelt es sich um ein schnurgebundenes "Desktop-Endgerät". Zur besseren Übersicht der für die Erfindung notwendigen Funktionseinheiten, sind keine weiteren Einheiten des Kommunikationsendgerätes KE-D dargestellt.

Im vorliegenden Ausführungsbeispiel ist die zweite Schnittstelle SS2 als USB-Schnittstelle (Universal Serial Bus) ausgestaltet. Über die zweite Schnittstelle SS2 ist ein sogenannter USB-WLAN-Dongle D an das Kommunikationsendgerät KE-D anschließbar, über den ein Verbindungsaufbau mit dem WLAN-Netzwerk WLAN-N erfolgt. Alternativ kann die zweite Schnittstelle SS2 als PCMCIA-Schnittstelle (Personal Computer Memory Card International Association) und der USB-WLAN-Dongle D als PCMCIA-WLAN-Steckkarte ausgestaltet sein. Derartige USB-WLAN-Dongle oder PCMCIA-WLAN-Steckkarten sind bereits erhältlich.

In dem ersten Netzwerk N ist eine zentrale Kommunikationseinrichtung Z - in der Literatur häufig als zentraler Kommunikationsserver oder Kommunikationsanlage bezeichnet - angeordnet, über die eine Steuerung des Kommunikationsendgerätes KE erfolgt. Unter Steuerung wird im vorliegenden Ausführungsbeispiel unter anderem die Realisierung von kommunikationseinrichtungs-individuellen Leistungsmerkmalen an dem Kommunikationsendgerät KE verstanden. Des Weiteren ist die zentrale Kommunikationseinrichtung Z über eine WLAN-Basisstation WLAN-AP - in der Literatur häufig als WLAN Access Point bezeichnet - mit dem WLAN-Netzwerk WLAN-N verbunden.

Zusätzlich ist in dem WLAN-Netzwerk WLAN-N ein schnurloses Kommunikationsendgerät KE-M angeordnet, von dem aus eine Verbindung mit der zentralen Kommunikationseinrichtung Z aufgebaut werden soll. Das schnurlose Kommunikationsendgerät KE-M ist beispielsweise ein schnurloses Telefon, oder eine mit einem Anschluss an das WLAN-Netzwerk WLAN-N ausgestaltete Datenverarbeitungseinrichtung, z.B. ein Laptop. Gemäß dem Stand der Technik wird ausgehend vom schnurlosen Kommunikationsendgerät KE-M eine erste Verbindung V1 mit der WLAN-Basisstation WLAN-AP und von dieser mit der zentralen Kommunikationseinrichtung Z aufgebaut. In Fällen, in denen sich das schnurlose Kommunikationsendgerät KE-M außerhalb der Funkzelle der WLAN-Basisstation WLAN-AP befindet, kann normalerweise keine Verbindung mit der zentralen Kommunikationseinrichtung Z aufgebaut werden. Dies ist in der Figur durch die gestrichelte, die erste Verbindung V1 darstellende Linie zwischen dem schnurlosen Kommunikationsendgerät KE-M und der WLAN-Basisstation WLAN-AP angedeutet.

Erfindungsgemäß ist deshalb vorgesehen, dass das als Desktop-Telefon ausgestaltete Kommunikationsendgerät KE-D mit dem Anstecken des USB-WLAN-Dongles D im WLAN-Netzwerk WLAN-N automatisch als WLAN-Basisstation eingerichtet wird. Somit besteht die Möglichkeit alternativ zur ersten Verbindung V1 eine zweite Verbindung V2 zwischen dem schnurlosen Kommunikationsendgerät KE-M und dem Kommunikationsendgerät KE-D einzurichten, wobei das Kommunikationsendgerät KE-D die Funktion einer WLAN-Basisstation übernimmt. Eine bidirektionale Datenübermittlung zwischen dem schnurlosen Kommunikationsendgerät KE-M und der zentralen Kommunikationseinrichtung Z erfolgt somit über den USB-WLAN-Dongle D, das Kommunikationsendgerät KE-D und das erste Kommunikationsnetz N.

Da in der Regel eine hohe Verfügbarkeit von Desktop-Endgeräten gegeben ist, kann durch die Ausgestaltung der Desktop-Endgeräte zu einem erfindungsgemäßen Kommunikationsendgerät KE auf einfache Weise eine hohe Netzabdeckung erreicht werden. Beispielsweise kann in einem Besprechungsraum, in dem keine Netzabdeckung vorhanden ist ein in dem Besprechungsraum vorhandenes Desktop-Endgerät als WLAN-Basisstation verwendet werden.

Hierbei ist zu beachten, dass die zwischen dem schnurlosen Kommunikationsendgerät KE-M und der zentralen Kommunikationseinrichtung Z zur Verfügung stehenden Übertragungsbandbreite durch den Anschluss des Kommunikationsendgerätes KE an das erste Netzwerk N begrenzt ist. Handelt es sich beispielsweise um ein ISDN-orientiertes Kommunikationsnetz, an welches das Kommunikationsendgerät KE-D über eine S₀-Schnittstelle angeschlossen ist, stehen bei einer Nutzung eines Nutzdatenkanals 64 kBit/s und bei einer Nutzung beider Nutzdatenkanäle maximal 128 kBit/s für eine Datenübertragung zur Verfügung. Da in der Regel Sprachdaten ausgetauscht werden, ist diese Datenübertragungsrate jedoch in den meisten Fällen ausreichend. Bei einer Ausgestaltung des ersten Netzwerkes (N) als IP-orientiertes Netzwerk steht dahingegen eine höhere Datenübertragungsrate zur Verfügung, so dass auch Multimediadaten komfortabel ausgetauscht werden können.

Gemäß einer weiteren Ausgestaltung der Erfindung kann das als Desktop-Telefon ausgestaltete erfindungsgemäße Kommunikationsendgerät KE-D direkt - d.h. ohne Zwischenschaltung des Netzwerkes N - an der zentralen Kommunikationseinrichtung Z angeschlossen werden.

Alternativ zur Ausgestaltung des als Desktop-Telefon ausgestalteten erfindungsgemäßen Kommunikationsendgerätes KE-D als WLAN-Basisstation kann das Kommunikationsendgerät KE-D auch als mobiles Kommunikationsendgerät betrieben werden. In diesem Fall erfolgt eine bidirektionale Datenübermittlung zwischen dem Kommunikationsendgerät KE-D und der zentralen Kommunikationseinrichtung Z nicht über das erste Netzwerk N, sondern über den USB-WLAN-Dongle D, das WLAN-Netzwerk WLAN-N und die WLAN-Basisstation WLAN-AP. Dadurch, dass das Kommunikationsendgerät KE-D zusätzlich als mobiles Kommunikationsendgerät genutzt werden kann, werden die bei herkömmlichen schnurlosen Kommunikationsendgeräten bestehenden Einschränkungen im Bereich der Bedienerfreundlichkeit, der Akkulaufzeit oder dem Freisprechkomfort umgangen.

Eine Stromversorgung des als Desktop-Telefon ausgestalteten erfindungsgemäßen Kommunikationsendgerätes KE-D erfolgt - wie bei Desktop-Endgeräten üblich - mittels einer - nicht dargestellten - separaten Stromversorgung. Alternativ besteht die Möglichkeit die Stromversorgung über die erste Schnittstelle SS1 und das erste Netzwerk N zu realisieren

## Patentansprüche

1. Desktop-Telefon (KE-D),
mit einer ersten Schnittstelle (SS1) zum Anschluss an ein erstes Netzwerk (N) für eine bidirektionale Übermittlung von Informationen mit einer im ersten Netzwerk (N) angeordneten zentralen Kommunikationseinrichtung (Z),
**gekennzeichnet durch**
eine zweite Schnittstelle (SS2) zum Anschluss einer Anschlusseinheit (D) eines Funknetzes (WLAN-N), und dass die Anschlusseinheit (D) und die zweite Schnittstelle (SS2) derart ausgestaltet sind,
- dass beim Anstecken der Anschlusseinheit (D) das Desktop-Telefon (KE-D) automatisch als Basisstation des Funknetzes (WLAN-N) eingerichtet wird, und
- dass eine Verbindung von einem Endgerät (KE-M) des Funknetzes (WLAN-N) über das Funknetz (WLAN-N) und das Desktop- Telefon (KE-D) mit augesteckter Anschlusseinheit (D) zu und von der zentralen Kommunikationseinrichtung (Z) aufgebaut werden kann.

2. Desktop-Telefon (KE-D) nach Anspruch 1,
**dadurch gekennzeichnet,**
**dass** die erste Schnittstelle (SS1) eine Schnittstelle zum Anschluss an ein Festnetz ist.

3. Desktop-Telefon (KE-D) nach Anspruch 2,
**dadurch gekennzeichnet,**
**dass** das Festnetz ein IP-orientiertes oder ein ISDN-Netzwerk ist.

4. Desktop-Telefon (KE-D) nach einem der Ansprüche 1 bis 3,
**dadurch gekennzeichnet,**
**dass** die zweite Schnittstelle (SS2) eine USB-Schnittstelle ist.

5. Desktop-Telefon (KE-D) nach Anspruch 4,
**dadurch gekennzeichnet,**
**dass** die Anschlusseinheit (D) ein USB-WLAN-Dongle ist.

6. Desktop-Telefon (KE-D) nach einem der Ansprüche 1 bis 3,
**dadurch gekennzeichnet,**
**dass** die zweite Schnittstelle (SS2) eine PCMCIA-Schnittstelle ist.

7. Desktop-Telefon (KE-D) nach Anspruch 7,
**dadurch gekennzeichnet,**
**dass** die Anschlusseinheit (D) eine PCMCIA-WLAN-Steckkarte ist.

8. Desktop-Telefon (KE-D) nach einem der vorhergehenden Ansprüche,
**dadurch gekennzeichnet,**
**dass** eine Stromversorgung des Desktop-Telefons (KE-D) über die erste Schnittstelle (SS1) und das erste Netzwerk (N) erfolgt.

9. Desktop-Telefon (KE-D) nach einem der Ansprüche 1 bis 7,
**dadurch gekennzeichnet,**
**dass** eine separate Stromversorgung des Desktop-Telefons (KE-D) vorgesehen ist.

10. Desktop-Telefon (KE-D) nach einem der vorhergehenden Ansprüche,
**dadurch gekennzeichnet,**
**dass** das Desktop-Telefon (KE-D) direkt an die zentrale Kommunikationseinrichtung (Z) angeschlossen ist.

11. Desktop-Telefon (KE-D) nach einem der vorhergehenden Ansprüche,
**dadurch gekennzeichnet,**
**dass** das Desktop-Telefon (KE-D) bei einer aktivierten Anschlusseinheit (D) zusätzlich als mobiles Kommunikationsendgerät ausgestaltet ist, wobei eine Verbindung mit der zentralen Kommunikationseinrichtung (Z) über das Funknetz (WLAN-N) erfolgt.

## Claims

1. Desktop telephone (KE-D), comprising a first interface (SS1) for connection to a first network (N) for bidirectional transmission of information with a communication facility (Z) arranged in the first network (N), **characterised by** a second interface (SS2) for connecting a connection unit (D) of a radio network (WLAN-N), and that the connection unit (D) and the second interface (SS2) are configured such,
- that on plugging in the connection unit (D), the desktop telephone (KE-D) is automatically set up as a base station of the radio network (WLAN-N), and
- that a connection from a terminal (KE-M) of the radio network (WLAN-N) can be established, via the radio network (WLAN-N) and the desktop telephone (KE-D) with plugged-in connection unit (D), to and from the central communication facility (Z).

2. Desktop telephone (KE-D) according to claim 1, **characterised in that** the first interface (SS1) is an interface for connecting to a fixed network.

3. Desktop telephone (KE-D) according to claim 2, **characterised in that** the fixed network is an IP-oriented network or an ISDN network.

4. Desktop telephone (KE-D) according to one of the claims 1 to 3, **characterised in that** the second interface (SS2) is a USB interface.

5. Desktop telephone (KE-D) according to claim 4, **characterised in that** the connection unit (D) is a USB-WLAN dongle.

6. Desktop telephone (KE-D) according to one of the claims 1 to 3, **characterised in that** the second interface (SS2) is a PCMCIA interface.

7. Desktop telephone (KE-D) according to claim 7, **characterised in that** the connection unit (D) is a PCMCIA-WLAN plug-in card.

8. Desktop telephone (KE-D) according to one of the preceding claims, **characterised in that** a power supply of the desktop telephone (KE-D) is implemented via the first interface (SS1) and the first network (N).

9. Desktop telephone (KE-D) according to one of the claims 1 to 7, **characterised in that** a separate power supply of the desktop telephone (KE-D) is provided.

10. Desktop telephone (KE-D) according to one of the preceding claims, **characterised in that** the desktop telephone (KE-D) is connected directly to the central communication facility (Z).

11. Desktop telephone (KE-D) according to one of the preceding claims, **characterised in that**, with the connection unit (D) activated, the desktop telephone (KE-D) is additionally configured as a mobile communication terminal, wherein a connection to the central communication facility (Z) takes place via the radio network (WLAN-N).

## Revendications

1. Téléphone de bureau (KE-D),
pourvu d'une première interface (SS1) destinée au raccordement à un premier réseau (N) pour une transmission bidirectionnelle d'informations avec un système de communication (Z) central disposé dans le premier réseau (N),
**caractérisé par**
une deuxième interface (SS2) destinée au raccordement d'une unité de raccordement (D) d'un réseau de radiocommunication (WLAN-N), et **caractérisé en ce que** l'unité de raccordement (D) et la deuxième interface (SS2) sont agencées de manière telle
- que, lors de l'insertion de l'unité de raccordement (D), le téléphone de bureau (KE-D) soit agencé automatiquement en station de base du réseau de radiocommunication (WLAN-N), et
- qu'une liaison d'un terminal (KE-M) du réseau de radiocommunication (WLAN-N) puisse être établie en direction et en provenance du système de communication central (Z) par le biais du réseau de radiocommunication (WLAN-N) et du téléphone de bureau (KE-D) pourvu de l'unité de raccordement (D) insérée.

2. Téléphone de bureau (KE-D) selon la revendication 1,
**caractérisé en ce**
**que** la première interface (SS1) est une interface destinée au raccordement à un réseau de service fixe.

3. Téléphone de bureau (KE-D) selon la revendication 2,
**caractérisé en ce**
**que** le réseau de service fixe est un réseau orienté IP ou un réseau RNIS.

4. Téléphone de bureau (KE-D) selon l'une des revendications 1 à 3,
**caractérisé en ce**
**que** la deuxième interface (SS2) est une interface USB.

5. Téléphone de bureau (KE-D) selon la revendication 4,
**caractérisé en ce**
**que** l'unité de raccordement (D) est une clé électronique USB-WLAN.

6. Téléphone de bureau (KE-D) selon l'une des revendications 1 à 3,
**caractérisé en ce**
**que** la deuxième interface (SS2) est une interface PCMCIA.

7. Téléphone de bureau (KE-D) selon la revendication 7,
**caractérisé en ce**
**que** l'unité de raccordement (D) est une carte enfichable PCMCIA-WLAN.

8. Téléphone de bureau (KE-D) selon l'une quelconque des revendications précédentes,
**caractérisé en ce**
**qu'**une alimentation électrique du téléphone de bureau (KE-D) est effectuée par le biais de la première interface (SS1) et du premier réseau (N).

9. Téléphone de bureau (KE-D) selon l'une des revendications 1 à 7,
**caractérisé en ce**
**qu'**il est prévu une alimentation électrique séparée du téléphone de bureau (KE-D).

10. Téléphone de bureau (KE-D) selon l'une quelconque des revendications précédentes,
**caractérisé en ce**
**que** le téléphone de bureau (KE-D) est raccordé directement au système de communication central (Z).

11. Téléphone de bureau (KE-D) selon l'une quelconque des revendications précédentes,
**caractérisé en ce**
**que**, lorsque l'unité de raccordement (D) est activée, le téléphone de bureau (KE-D) est arrangé en plus en tant que terminal de communication mobile, une liaison avec le système de communication central (Z) étant effectuée par le biais du réseau de radiocommunication (WLAN-N).
